# EUROPÄISCHE PATENTSCHRIFT

(11) **EP 0 907 839 B1**
(45) Veröffentlichungstag und Bekanntmachung des Hinweises auf die Patenterteilung: **07.08.2002**
(21) Anmeldenummer: 97928196.1
(22) Anmeldetag: 13.06.1997
(51) Int. Cl.: F16D 55/224

(54) **FEDERANORDNUNG FÜR EINE SCHWIMMSATTELSCHEIBENBREMSE**
SPRING ASSEMBLY FOR A FLOATING CALLIPER DISC BRAKE
ENSEMBLE A RESSORT POUR FREINS A DISQUE A ETRIER FLOTTANT

(30) Priorität: 01.07.1996 DE 19626299
(43) Veröffentlichungstag der Anmeldung: 14.04.1999
(73) Patentinhaber: Continental Teves AG & Co. oHG, 60488 Frankfurt (DE)
(72) Erfinder: WEILER, Rolf, D-65817 Eppstein (DE); KIRSCHNER, Thomas, D-60596 Frankfurt (DE); GERHARDT, Winfried, D-60489 Frankfurt (DE)
(74) Vertreter: Portwich, Peter
(86) Internationale Anmeldenummer: EP9703090
(87) Internationale Veröffentlichungsnummer: WO9800647

(56) Entgegenhaltungen:
- DE-A- 3 336 302
- DE-A- 3 921 346
- DE-A- 4 331 633

## Beschreibung

Die Erfindung bezieht sich auf eine Schwimmsattelscheibenbremse, wobei der Schwimmsattel ein Faustrahmensattel ist und im mittleren Bereich seines axial äußeren Faustrahmensattelschenkels ein Schenkelfenster und beiderseits des Schenkelfensters Durchbrüche für jeweils einen axialen Tragarm eines gestellfesten Bremsträgers aufweist.

Aus der DE 33 36 302 A1 ist eine Federanordnung für eine Schwimmsattelscheibenbremse bekannt, wobei der Schwimmsattel ein Faustsattel ohne Rahmen ist. Eine einstückig aus Draht gebogene Haltefeder ist an der Rückseite des axial äußeren Bremsbelages vernietet und außerdem gegen Verdrehen in der Ebene der Bremsscheibe gesichert. Zwei freie Federarme stützen sich axial an der Außenseite des Faustschenkels ab und verspannen den Bremsbelag axial an dem Faustschenkel, und ein einziger, als Parallelfeder ausgebildeter Federarm erstreckt sich tangential nach einer Seite hin und stützt sich an einem Tragarm des Bremsträgers ab, um den Bremsbelag radial gegen den Bremsträger zu verspannen. Die radiale Verspannung des Faustsattels gegen den Bremsträger erfolgt indirekt dadurch, daß der äußere Bremsbelag über einen Mitnehmer mit dem Faustschenkel des Faustsattels gekoppelt ist.

Unabhängig davon, daß eine derartige Federanordnung für eine Schwimmsattelscheibenbremse mit einem Faustrahmensattel nicht zu gebrauchen ist, weist sie weitere Nachteile auf. Dadurch, daß nur ein einziger Federarm für die radiale Verspannung vorhanden ist, wird in der Ebene der Bremsscheibe ein Drehmoment in den Bremsbelag eingetragen, wodurch der Bremsbelag an der dem einzigen Federarm gegenüberliegenden Seite dazu neigt, von dem Tragarm des Bremsträgers abzuheben. Eine wirkungsvolle Bekämpfung von Klappergeräuschen ist damit nicht erreichbar. Außerdem ist die Haltefeder unlösbar mit dem Bremsbelag verbunden und muß deshalb zusammen mit dem verschlissenen Bremsbelag ausgewechselt werden.

Eine andere Federanordnung für eine Schwimmsattelscheibenbremse mit einem Faustsattel ohne Rahmen ist aus der DE 43 31 633 A1 bekannt. Eine einstückig aus Draht gebogene Haltefeder ist lösbar mit dem axial äußeren Bremsbelag verbunden und verspannt mit zwei seitlichen Federarmen den Bremsbelag radial gegen den Bremsträger.Da der Bremsbelag über zwei axial abstehende Mitnehmer mit dem Faustschenkel des Faustsattels gekoppelt ist, wird dadurch auch indirekt der Faustsattel radial gegen den Bremsträger verspannt. Auf der Rückseite der Trägerplatte des Bremsbelages stehen zwei in einem bestimmten Abstand übereinander angebrachte Kerbnägel hervor, die eine im mittleren Bereich der Haltefeder ausgebildete rautenförmige Umschlingung aufnehmen. Die Haltefeder muß in der Ebene der Bremsscheibe um 90° verdreht werden, um diese zwecks Montage oder Demontage aufgrund des größeren Abstandes zwischen den betreffenden Ecken der rautenförmigen Umschlingung der Haltefeder über die Köpfe der Kerbnägel bewegen zu können. Unabhängig davon, daß der DE 43 31 633 A1 nicht entnehmbar ist, daß die Federanordnung auch noch den äußeren Bremsbelag axial gegen den äußeren Schwimmsattelschenkel verspannt, ist diese Federanordnung nicht für eine mit einem Faustrahmensattel ausgestattete Gattung von Schwimmsattelscheibenbremsen verwendbar.

Aufgabe der Erfindung ist es, eine für eine Schwimmsattelscheibenbremse mit einem Faustrahmensattel geeignete Federanordnung zu schaffen.

Erfindungsgemäß wird die Aufgabe durch eine Schwimmsattelscheibenbremse mit den Merkmalen des Anspruchs 1 gelöst.

Vorteilhafte Ausgestaltungen der Erfindung ergeben sich aus den Unteransprüchen bzw. aus den zulässigen Anspruchskombinationen.

Für eine Schwimmsattelscheibenbremse mit einem Faustrahmensattel, der im mittleren Bereich seines axial äußeren Faustrahmensattelschenkels ein Schenkelfenster und beiderseits dieses Schenkelfensters Durchbrüche für jeweils einen axialen Tragarm des gestellfesten Bremsträgers aufweist, und dabei insbesondere hinsichtlich einer quer zur Bremsscheibe verlaufenden Mittelebene symmetrisch gestaltet ist, ist eine Federanordnung gemäß Anspruch 2 von Vorteil. Hierbei ist vorgesehen, daß der mittlere Abschnitt der Haltefeder im wesentlichen in dem Schenkelfenster des äußeren Faustrahmensattelschenkels angeordnet ist und daß die beiden Federarme der Haltefeder im wesentlichen an der Außenseite des äußeren Faustrahmensattelschenkels angeordnet sind und jeweils mit ihren äußeren Endabschnitten in axialer Richtung die Durchbrüche in dem Faustrahmensattel für die Tragarme des Bremsträgers durchgreifen und sich außerdem mit radialer Vorspannung gleitend an den Unterseiten der Tragarme des Bremsträgers abstützen.

Eine vorteilhafte Ausgestaltung der Federanordnung nach Anspruch 3 ist auf eine einfach herstellbare lösbare Verbindung der Haltefeder mit dem äußeren Bremsbelag und dessen axial ziehende Abstützung gegen die Innenseite des Faustrahmensattelschenkels gerichtet. Der mittlere Abschnitt der Haltefeder besitzt dazu einen haarnadelförmig gebogenen Mittelteil, dessen Schenkel einen verdickten, und sich vorzugsweise nach axial auswärts verjüngenden, Kopf eines Zapfens hintergreifen, der an dem äußeren Bremsbelag angebracht ist und axial von diesem in das Schenkelfenster hinein absteht. Der Mittelteil der Haltefeder ist außerdem über entsprechende Verbindungsabschnitte unter axialer Zugspannung jeweils mit einem sich axial an dem äußeren Faustrahmensattelschenkel abstützenden Federarm der Haltefeder verbunden. Zur Herstellung der lösbaren Verbindung von Haltefeder und Bremsbelag wird der haarnadelförmig gebogene Mittelteil der Haltefeder einfach in radialer Richtung den Kopf hintergreifend mit seiner offenen Seite auf den Zapfen aufgeschoben. Eine sich axial verjüngende Gestalt des Kopfes ermöglicht auch eine andere Art der Montage, wobei der haarnadelförmig gebogene Mittelteil in axialer Richtung auf den Zapfen des Bremsbelages aufgerastet wird und die Schenkel dieses haarnadelförmig gebogenen Mittelteiles vorübergehend federelastisch auseinandergespreizt werden.

Empfohlen wird eine Ausgestaltung der Federanordnung gemäß Anspruch 4, welche vorsieht, daß die beiden Schenkel des haarnadelförmigen Mittelteiles jeweils in einen haarnadelartig in die entgegengesetzte Richtung umgebogenen zweiten Schenkel übergehen, der über ein im wesentlichen axial verlaufendes Stück in einen äußeren Federarm der Haltefeder übergeht. Durch diese Ausgestaltung wird die Elastizität des mittleren Abschnittes der Haltefeder sowohl in tangentialer als auch in axialer Richtung erhöht, wodurch die Montage bzw. Demontage der Haltefeder erleichtert wird.

Bevorzugt wird jedoch eine andere Variante der Federanordnung gemäß Anspruch 5, welche auf eine weitere Erleichterung bei der Montage der Haltefeder gerichtet ist und eine einfachere Gestalt der Haltefeder zuläßt. Hierbei ist vorgesehen, daß der mittlere Abschnitt der Haltefeder einen tangential verlaufenden Mittelteil aufweist, von dem aus sich beiderseits ein Schenkel entgegen der radialen Richtung erstreckt, wobei diese beiden Schenkel wiederum jeweils über ein im wesentlichen axial verlaufendes Stück in die Federarme der Haltefeder übergehen. Die beiden axialen Stücke sind dabei so gestaltet, daß sie sich jeweils mit einem Abschnitt, vorzugsweise punktförmig, auf der Unterseite des Schenkelfensters abstützen und dabei so mit den Federarmen der Haltefeder verbunden sind, daß ein den Mittelteil der Haltefeder nach außen ziehendes Kippmoment in dem mittleren Abschnitt der Haltefeder besteht.

In diesem Zusammenhang wird eine Ausgestaltung gemäß Anspruch 6 empfohlen, welche vorsieht, daß der tangentiale Mittelteil des mittleren Abschnittes der Haltefeder hinter eine Blechlasche eingehängt ist, die an der Rückseite des äußeren Bremsbelages befestigt ist und vorzugsweise nach unten und dabei mit einem stufenförmig erweiterten Absatz geöffnet ist. Bei der Montage der Haltefeder wird in diesem Fall der mittlere, tangentiale Teil der Haltefeder von unten her hinter die Blechlasche gebracht, wobei die Haltefeder derartig um ihre Längsachse geschwenkt wird, daß sie sich mit den betreffenden Abschnitten auf der Unterseite des Schenkelfensters abstützt und dabei gleichzeitig ihr tangentialer Mittelteil an der Rückseite der Blechlasche in radialer Richtung bewegt wird. Der stufenförmig erweiterte Absatz der Blechlasche erleichtert die Montage der Haltefeder dahingehend, daß er der Haltefeder während ihrer Montage in einer geeigneten Zwischenstellung einen vorläufigen Halt verleiht.

Eine Ausgestaltung der Erfindung gemäß Anspruch 7 ermöglicht es, der Haltefeder bei voller Gewährleistung ihrer Funktion eine möglichst einfache Gestalt zu geben, obwohl aufgrund des speziellen Typs eines Schwimmsattels relativ komplizierte geometrische Bedingungen vorgegeben sind. Es ist vorgesehen, daß sich die beiden Federarme der Haltefeder jeweils in ihrem mittleren Bereich entgegen der radialen Richtung und mit ihrem zum mittleren Abschnitt weisenden inneren Federschenkel in radialer Richtung an einem am Rahmen des Faustrahmensattels vorgesehenen axialen Vorsprung oder Rücksprung abstützen.

Hierzu gibt es wiederum zwei vorteilhafte Varianten. Eine Ausgestaltung gemäß Anspruch 8 sieht vor, daß die mittleren Bereiche der beiden Federarme der Haltefeder jeweils als spiralförmige Umschlingung ausgebildet sind und jeweils auf einem zylindrischen, axial abstehenden Zapfen gelagert sind, die am Rahmen des Faustrahmensattels angebracht sind, und daß sich die inneren Federschenkel der beiden Federarme der Haltefeder an der Oberseite einer axial offenen, nutartigen Vertiefung im Rahmen des Faustrahmensattels abstützen. Diese Ausgestaltung gewährleistet einen sehr sicheren Sitz der Haltefeder, sie erfordert jedoch andererseits das Vorhandensein von axial abstehenden Zapfen am Rahmen des Faustrahmensattels, was nachteilig sein kann, wenn in axialer Richtung nur ein minimal kleiner Baurahmen zur Verfügung steht.

Bevorzugt wird eine vorteilhafte Ausgestaltung gemäß Anspruch 9, welche vorsieht, daß die mittleren Bereiche der beiden Federarme der Haltefeder als entgegen der radialen Richtung weisende Scheitelpunkte von zwei in einem stumpfen Winkel zueinander verlaufenden Federschenkeln ausgebildet sind, die sich an der Unterseite, d.h. an der in die radiale Richtung weisenden Seite, einer axial offenen nutartigen Vertiefung des Rahmens des Faustrahmensattels abstützen. Dabei stützen sich gleichzeitig die jeweils inneren Federschenkel der beiden Federarme an der Oberseite dieser nutartigen Vertiefung ab, also an der entgegen der radialen Richtung weisenden Seite der nutartigen Vertiefung. Diese Ausgestaltung hat insbesondere den Vorteil, daß sie weniger Bauraum in axialer Richtung der Scheibenbremse benötigt und daß außerdem die Gestalt der Haltefeder weniger kompliziert und dadurch einfacher herstellbar ist.

Um eine in allen Situationen sichere Arretierung der Haltefeder in der axialen Richtung der Scheibenbremse zu gewährleisten, wird eine Ausgestaltung gemäß Anspruch 10 empfohlen. Demgemäß ist vorgesehen, daß die freien Enden der Haltefeder, welche sich an die äußeren Endabschnitte der Federarme, die die Durchbrüche des Faustsattels durchgreifen, anschließen, derartig umgebogen sind, daß sie die Innenseite des Rahmens des Faustrahmensattels hintergreifen und somit die Haltefeder axial am Faustrahmensattel arretieren.

Nachfolgend sind verschiedene Ausführungsbeispiele näher beschrieben. In den zugehörigen Zeichnungen zeigen:
- Fig. 1: eine Ansicht einer Federanordnung für eine Schwimmsattelscheibenbremse mit einem Faustrahmensattel,
- Fig. 2: eine Ansicht einer Haltefeder,
- Fig. 3: eine Draufsicht der Haltefeder von Fig. 2,
- Fig. 4: eine Seitenansicht der Haltefeder von Fig. 3,
- Fig. 5: als Ausschnitt ein Ausführungsbeispiel einer lösbaren Verbindung von Bremsbelag und Haltefeder,
- Fig. 6: in Schnittdarstellung ein Detail der Federanordnung von Fig. 1,
- Fig. 7: in einer Ansicht ein anderes Ausführungsbeispiel einer Federanordnung für eine Schwimmsattelscheibenbremse mit einem Faustrahmensattel und
- Fig. 8: einen senkrechten Querschnitt entlang der Linie VIII-VIII in Fig. 7.

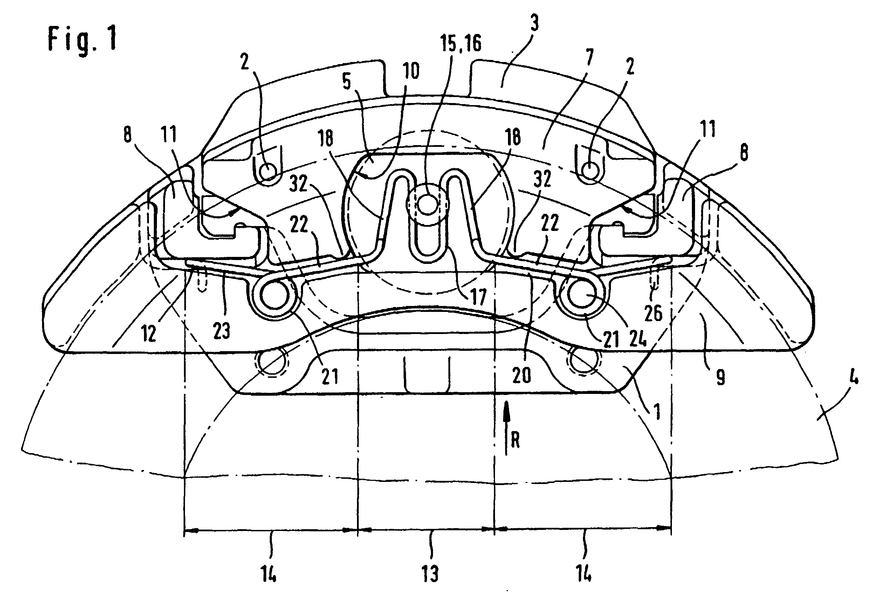

Die in den Fig. 1 sowie 7 und 8 dargestellten Schwimmsattelscheibenbremsen besitzen einen gestellfest am Fahrzeug zu befestigenden Bremsträger 1, an dem mittels zweier Bolzenführungen 2 ein als Faustrahmensattel 3 ausgebildeter Schwimmsattel axial verschiebbar gelagert ist. Der Faustrahmensattel 3 übergreift die Bremsscheibe 4 und nimmt zwei aus Reibbelag und Rückenplatte bestehende Bremsbeläge 5 auf, von denen der innere direkt über eine hydraulische Betätigungseinrichtung 6 und der äußere indirekt über den äußeren Faustrahmensattelschenkel 7 des Faustrahmensattels 3 an die Bremsscheibe 4 andrückbar ist. Dabei sind die Bremsbeläge in Tragarmen 8 des Bremsträgers 1, die die Bremsscheibe 4 axial übergreifen, axial verschiebbar abgestützt und geführt. Der Faustrahmensattel 3 zeichnet sich dadurch aus, daß er aus Gründen der Erhöhung seiner Stabilität und Verwindungssteifigkeit einen Rahmen 9 besitzt, der den unteren Rand des Faustsattels rahmenartig umgibt und mit diesem verbunden ist. Der Faustrahmensattel 3 ist so gestaltet, daß sich mittig in dem axial äußeren Faustrahmensattelschenkel 7 ein Schenkelfenster 10 und beiderseits dieses Schenkelfensters 10 jeweils ein Durchbruch 11 für die Tragarme 8 des Bremsträgers 1 befinden.

Zu der erfindungsgemäßen Federanordnung gehört noch eine Haltefeder 12, die sich im wesentlichen parallel zur Bremsscheibe 4 erstreckt. Diese Haltefeder 12 weist einen mittleren Abschnitt 13 auf, der im wesentlichen innerhalb des Schenkelfensters 10 angeordnet und lösbar mit dem axial äußeren Bremsbelag 5 verbunden ist. An den mittleren Abschnitt 13 der Haltefeder 12 schließen sich die beiden Federarme 14 an, die sich jeweils ausgehend vom mittleren Abschnitt 13 in entgegengesetzte tangentiale Richtungen erstrecken. Die Federanordnung, deren wesentliches Bestandteil die Haltefeder 12 ist, ist so gestaltet, daß sowohl der äußere Bremsbelag 5 in axialer Richtung gegen die Innenseite des äußeren Faustrahmensattelschenkels als auch der Faustrahmensattel 3 entgegen der radialen Richtung R gegen den Bremsträger 1 dessen Axiale Tragarme 8 verspannt ist, um im wesentlichen Klappergeräusche der Scheibenbremsen beim Betrieb des Fahrzeuges zu vermeiden.

Ein erstes Ausführungsbeispiel einer Federanordnung ergibt sich aus den Fig. 1 bis 6. Die Haltefeder 12 ist im wesentlichen parallel zur Bremsscheibe 4 angeordnet und ist, genauso wie die ganze Scheibenbremse, hinsichtlich einer quer zur Bremsscheibe verlaufenden Mittelebene, symmetrisch aufgebaut. Der mittlere Abschnitt 13 der Haltefeder 12 ist im wesentlichen innerhalb des Schenkelfensters 10 des Faustrahmensattels 3 angeordnet und ist außerdem lösbar mit der Rückenplatte des axial äußeren Bremsbelages 5 verbunden. Dazu ist an der Rückenplatte des Bremsbelages 5 ein Zapfen 15 angebracht, der axial in das Schenkelfenster 10 hineinragt und an seinem freien Ende einen verdickten Kopf 16 aufweist, der zum freien Ende hin kegelförmig verjüngt ausgebildet ist. Dieser Zapfen 15 mit Kopf 16 kann von einer axialen Ausprägung des Materials der Rückenplatte des Bremsbelages 5 oder auch von einem in die Rückenplatte des Bremsbelages 5 eingebrachten Kerbnagel gebildet sein.

Demgegenüber besitzt der mittlere Abschnitt 13 der Haltefeder 12 einen haarnadelförmigen Mittelteil 17, dessen Schenkel in radialer Richtung R verlaufen und in diese Richtung R geöffnet sind. Die Schenkel des haarnadelförmigen Mittelteiles 17 nehmen zwischen sich den Zapfen 15 auf und hintergreifen dabei den Kopf 16 dieses Zapfens 15, um so eine einfach herstellbare, lösbare Verbindung zu bilden. Diese lösbare Verbindung wird einfach dadurch hergestellt, daß der haarnadelförmige Mittelteil 17 in axialer Richtung derartig auf den kegelförmig verjüngten Kopf 16 des Zapfens 15 gedrückt wird, daß die Schenkel des haarnadelförmigen Mittelteiles 17 auf den kegelförmigen Kopfe 16 aufgleiten und vorübergehend federelastisch auseinandergespreizt werden, bis sie den Kopf 16 überrasten und hinter diesem in ihre Ausgangslage zurückschnappen und den Zapfen 15 zwischen sich aufnehmen. Der verdickte Kopf 16 bildet also einen Anschlag für den Mittelteil 17 der Haltefeder 12 in axialer Richtung. Damit die erforderlichen Kräfte für das Auseinanderspreizen des haarnadelförmigen Mittelteiles 17 nicht zu groß sind, wird die Elastizität des mittleren Abschnittes 13 der Haltefeder in tangentialer Richtung der Bremsscheibe 4 dadurch erhöht, daß die beiden Schenkel des haarnadelförmigen Mittelteils 17 an ihren Enden durch eine entgegen der radialen Richtung R verlaufende weitere haarnadelartige Biegung jeweils in einen zweiten Schenkel 18 übergehen, der im wesentlichen entgegen der radialen Richtung R verläuft. An die zweiten Schenkel 18 schließt sich jeweils ein axial verlaufendes Stück 19 der Haltefeder 12 an, welches an die Außenseite des äußeren Faustrahmensattelschenkels 7 führt und dort mit einem Federarm 14 verbunden ist.

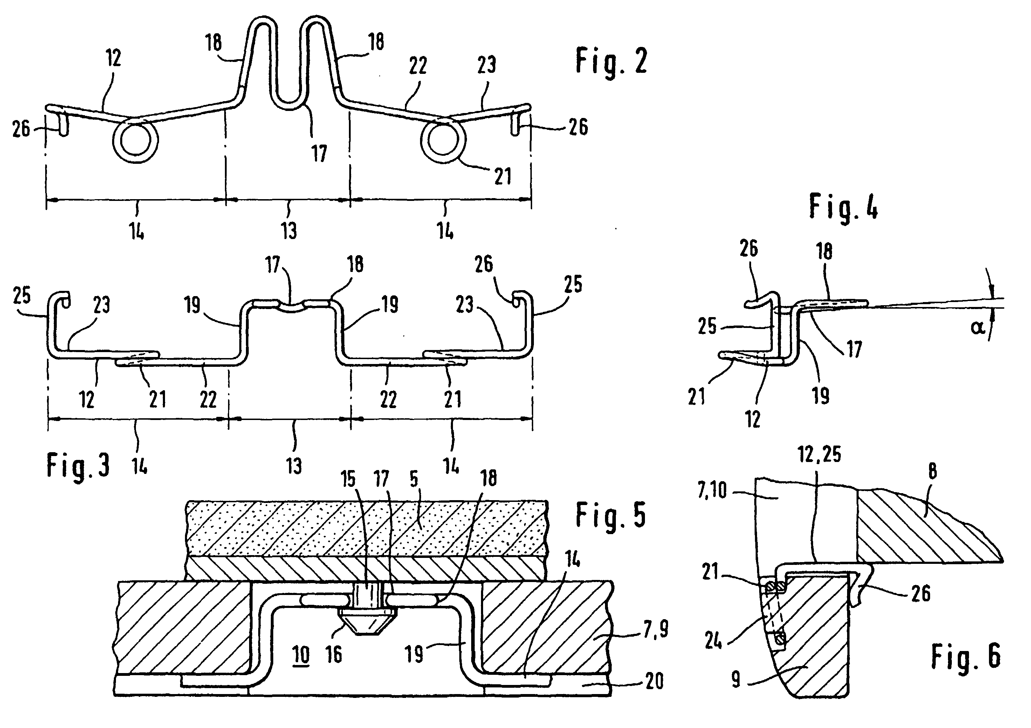

Die Federarme 14, welche sich ausgehend vom mittleren Abschnitt 13 jeweils in entgegengesetzte tangentiale Richtungen erstrecken, sind zu einem großen Teil in einer nutartigen Vertiefung 20 angeordnet, die in den Rahmen 9 des Faustrahmensattels 3 eingearbeitet ist und axial nach außen offen ist. Die beiden Federarme 14 stützen sich in axialer Richtung am Grund dieser nutartigen Vertiefung 20 ab. Um den äußeren Bremsbelag 5 axial an der Innenseite des Faustrahmensattelschenkels 7 zu verspannen, ist, wie aus Fig. 4 ersichtlich, im entspannten Zustand der Haltefeder 12 der haarnadelförmige Mittelteil 17 gegenüber den zweiten Schenkeln 18 um einen spitzen Winkel α, der ca. 5° beträgt, axial nach auswärts abgewinkelt. Dadurch wird gewährleistet, daß die Schenkel des haarnadelförmigen Mittelteils 17 den Kopf 16 des am Bremsbelag 5 angebrachten Zapfens 15 mit axialer Zugspannung hintergreifen.

Es ist noch zu erkennen, daß die Federarme 14 in ihrem mittleren Bereich jeweils eine spiralartige Umschlingung 21 aufweisen, wodurch jeweils ein innerer Federschenkel 22 und ein äußerer Federschenkel 23 gebildet sind, wobei die inneren Federschenkel 22 mit den axial verlaufenden Stücken 19 des mittleren Abschnittes 13 verbunden sind. Die über die Umschlingung 21 miteinander verbundenen inneren Federschenkel 22 und äußeren Federschenkel 23 bilden jeweils eine Torsionsfeder, die mit der Umschlingung 21 auf einem zylindrischen Zapfen 24 gelagert ist. Die zylindrischen Zapfen 24 sind innerhalb der nutartigen Vertiefung 20 angeordnet, und stehen vom Grund der nutartigen Vertiefung 20 in axialer Richtung nach auswärts ab. In vorteilhafter Weise sind diese zylindrischen Zapfen 24 gießtechnisch hergestellt und somit einstückiger Bestandteil des Rahmens 9 bzw. des Faustrahmensattels 3.

Die inneren Federschenkel 22 der Federarme 14 sind in der Nut 20 des Rahmens 9 angeordnet, und stützen sich in der radialen Richtung R an der Oberseite der Nut 20 ab. Um eine punktartige Abstützung der inneren Federschenkel 22 zu erreichen, sind im Bereich des Übergangs der Nut 20 in das Schenkelfenster 10 noppenartige Vorsprünge 25 an die Oberseite der Nut 20 angeformt, die entgegen der radialen Richtung R in die Nut 20 hineinragen. Die Endabschnitte 24 der Federarme 14 bzw. der äußeren Federschenkel 23 sind in axialer Richtung nach einwärts umgebogen und durchgreifen jeweils einen Durchbruch 11 im Faustrahmensattel 3, um sich mit entsprechender Federspannung in radialer Richtung R an den Unterseiten der Tragarme 8 des Bremsträgers 1 abzustützen. Dadurch wird der Faustrahmensattel 3 gleichmäßig radial gegen den Bremsträger 1 verspannt, ohne daß, wie bei einer bekannten Federanordnung mit nur einem seitlichen Federarm, in der Ebene der Bremsscheibe 4 ein Drehmoment in den Bremsbelag 5 eingetragen wird. Außerdem wird die Federmontage erleichtert, da jeder der beiden Federarme 14 nur die Hälfte der Spannkraft aufbringen muß, die insgesamt für die ordnungsgemäße Verspannung des Faustrahmensattels 3 gegen den Bremsträger 1 erforderlich ist.

Die Haltefeder 12 dieses ersten Ausführungsbeispieles einer Federanordnung ist noch mit einem zusätzlichen Mittel zur Arretierung der Haltefeder 12 an dem Rahmen 9 des Faustrahmensattels 3 in axialer Richtung ausgestattet. Dieses Mittel besteht darin, daß die freien Enden 26 der Federarme 14 bzw. der äußeren Federschenkel 23, welche sich jeweils an den Endabschnitt 25 anschließen, derartig umgebogen sind, daß sie die Innenseite des Rahmens 9 des Faustrahmensattels 3 hintergreifen. Um eine sichere Arretierung der Haltefeder 12 in axialer Richtung zu erreichen, sind die freien Enden 26 teilweise schräg nach axial auswärts gerichtet, um eine axiale Verspannung der Haltefeder am Rahmen 9 des Faustrahmensattels 3 zu erreichen. Diese zusätzliche Arretierung der Haltefeder 12 ist besonders dann wichtig, wenn aus Platzgründen die zylindrischen Zapfen 24, auf denen die Umschlingungen 21 der Federarme 14 gelagert sind, nur eine relativ geringe Ausdehnung in axialer Richtung besitzen können. Durch diese zusätzliche axiale Arretierung mit den umgebogenen freien Enden 26 wird verhindert, daß bei entsprechenden Belastungsbedingungen die Umschlingungen 21 der Haltefeder 21 von den zylindrischen Zapfen 24 abspringen können. Letztgenannter Sachverhalt ist besonders gut in Fig. 6 zu erkennen. In Fig. 6 ist außerdem zu erkennen, wie sich die Haltefeder 12 mit ihrem Endabschnitt 25 gleitend an der Unterseite des Tragarmes 8 des Bremsträgers 1 abstützt.

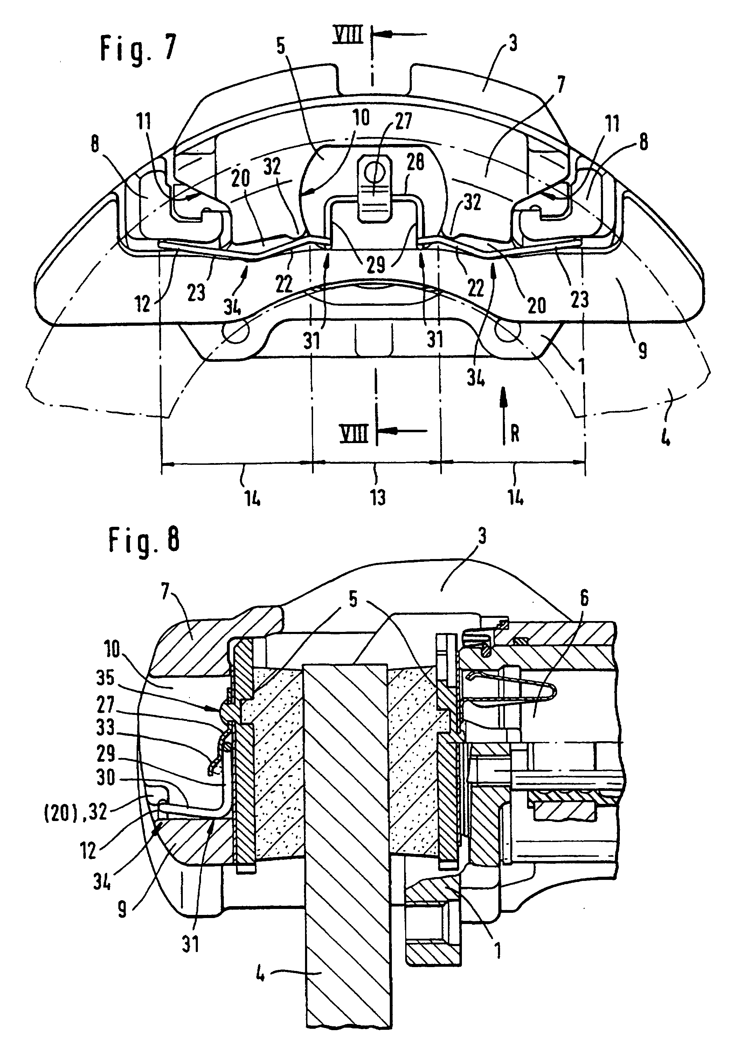

Ein anderes Ausführungsbeispiel einer Federanordnung für eine Faustrahmensattelscheibenbremse ist den Fig. 7 und 8 entnehmbar. Wesentlicher Bestandteil dieser Federanordnung ist wiederum eine Haltefeder 12, die einen im wesentlichen innerhalb des Schenkelfensters 10 des Faustrahmensattelschenkels 7 angeordneten mittleren Abschnitt 13 aufweist, von dem aus sich in entgegengesetzte tangentiale Richtungen jeweils ein Federarm 14 erstreckt. An die Rückenplatte des äußeren Bremsbelages 5 ist eine Blechlasche 27 angenietet, die entgegen der radialen Richtung R geöffnet ist und außerdem axial in das Schenkelfenster 10 hineinragt. Der mittlere Abschnitt 13 der Haltefeder 12 besitzt einen geraden, tangential verlaufenden Mittelteil 28, der die am Bremsbelag 5 befestigte Blechlasche 27 hintergreift. Von den beiden Enden des tangentialen Mittelteiles 28 aus erstreckt sich jeweils ein Schenkel 29 parallel zur Bremsscheibe 4 und entgegen der radialen Richtung R. Diese Schenkel 29 gehen jeweils in ein im wesentlichen axial verlaufendes Stück 30 über, wobei diese axialen Stücke 30 wiederum mit den beiden Federarmen 14 der Haltefeder 12 verbunden sind.

Um den äußeren Bremsbelag 5 mit axialer Zugspannung gegen die Innenseite des Faustrahmensattelschenkels 7 zu verspannen, ist der mittlere Abschnitt 13 der Haltefeder 12 so ausgebildet, daß ein Kippmoment den tangentialen Mittelteil 28 axial nach außen zieht. Um das zu erreichen, stützen sich die beiden im wesentlichen tangential verlaufenden Schenkel 29 jeweils an einer Abstützstelle 31 auf dem Boden des Schenkelfensters 10 ab. Da außerdem die Schenkel 30 nicht parallel zu dem Boden des Schenkelfensters 10 verlaufen, sondern ausgehend von der Abstützstelle 31 leicht ansteigen, ist die Möglichkeit geschaffen, den mittleren Abschnitt 13 so unter Spannung zu setzen, daß ein ständiges Kippmoment den tangentialen Mittelteil 28 axial nach außen zieht. Der Spannungszustand des mittleren Abschnittes 13 wird dadurch erreicht, daß die Federarme 14 im Bereich der inneren Federschenkel 22 entgegen der radialen Richtung R jeweils an der Oberseite der axial offenen, nutartigen Vertiefung 20 in dem Rahmen 9 des Faustrahmensattels 3 abstützen, speziell an den noppenartigen Vorsprüngen 32, die von oben her in die nutartige Vertiefung 20 hineinragen. Außerdem stützen sich die beiden Federarme 14 axial an der Außenseite des Faustrahmensattelschenkels 7 und dabei auf dem Grund der nutartigen Vertifung 20 ab.

In Fig. 8 ist noch zu erkennen, daß die Blechlasche 27 nach unten hin einen stufenförmig erweiterten Absatz 33 besitzt. Dieser stufenförmige Absatz 33 erleichtert die Montage der Haltefeder 12 dahingehend, daß sie während des Montagevorganges zunächst in diesen stufenförmigen Absatz 33 eingehängt wird und dadurch bereits in einer vorübergehenden Zwischenposition sicher gehalten ist, bevor sie ihre Endlage erreicht.

Aus Fig. 7 ist ersichtlich, daß die beiden Federarme 14 der Haltefeder 12 eine gleichmäßige radiale Verspannung des Faustrahmensattels 3 an dem Bremsträger 1 gewährleisten, ohne ein störendes Drehmoment in den Bremsbelag 5 einzutragen. Die Federarme 14 weisen wiederum jeweils einen inneren Federschenkel 22 und einen äußeren Federschenkel 23 auf, die in einem Scheitelpunkt 34 in stumpfem Winkel miteinander verbunden sind. Die Scheitelpunkte 34 der Federarme 14 stützen sich jeweils entgegen der radialen Richtung R auf der Unterseite der nutartigen Vertiefung 20 ab, während sich die inneren Enden der inneren Federschenkel 22 in radialer Richtung R an den noppenartigen Vorsprüngen 32 abstützen, welche von oben her in die nutartige Vertiefung 20 hineinragen.

Im weiteren ist die Haltefeder 12 dieses Ausführungsbeispieles zu ihren Enden hin genauso ausgebildet, wie die Haltefeder 12 des in den Fig. 1 bis 6 dargestellten ersten Ausführungsbeispieles. Das bedeutet, daß die Haltefeder 12 an ihren äußeren Federschenkeln 23 jeweils einen in axialer Richtung umgebogenen Endabschnitt 25 aufweist, die, wie in Fig. 6 gezeigt, die Durchbrüche 11 durchgreifen und sich in der radialen Richtung R gleitend an der Unterseite der Tragarme 8 des Bremsträgers 1 abstützen. Außerdem sind die freien Enden 26 der Haltefeder 12 ebenfalls wie in Fig. 6 gezeigt, derartig umgebogen, daß sie die Innenseite des Rahmens 9 des Faustrahmensattels 3 hintergreifen und die Haltefeder 12 dadurch in axialer Richtung sicher am Rahmen 9 des Faustrahmensattels 3 verspannen.

Aus Fig. 8 ist noch erkennbar, daß der Nietzapfen 35, an welchem die Blechlasche 27 vernietet ist, in vorteilhafter Weise als Materialausprägung der Rückenplatte des Bremsbelages 5 hergestellt worden ist.

### Bezugszeichenliste

- 1: Bremsträger
- 2: Bolzenführung
- 3: Faustrahmensattel
- 4: Bremsscheibe
- 5: Bremsbelag
- 6: Hydraulische Betätigungseinrichtung
- 7: Faustrahmensattelschenkel
- B: Tragarm
- 9: Rahmen
- 10: Schenkelfenster
- 11: Durchbruch
- 12: .Haltefeder
- 13: Mittlerer Abschnitt
- 14: Federarm
- 15: Zapfen
- 16: Kopf
- 17: Mittelteil
- 18: Zweiter Schenkel
- 19: Stück
- 20: Nutartige Vertiefung
- 21: Umschlingung
- 22: Innerer Federschenkel
- 23: Äußerer Federschenkel
- 24: Zylindrischer Zapfen
- 25: Endabschnitt
- 26: Freies Ende
- 27: Blechlasche
- 28: Mittelteil
- 29: Schenkel
- 30: Stück
- 31: Abstützstelle
- 32: Vorsprung
- 33: Absatz
- 34: Scheitelpunkt
- 35: Nietzapfen
- α: Winkel
- R: Radiale Richtung

## Patentansprüche

1. Schwimmsattelscheibenbremse mit einem Faustrahmensattel (3), der im mittleren Bereich seines axial äußeren Faustrahmensattelschenkels (7) ein Schenkelfenster (10) und beiderseits dieses Schenkelfensters (10) Durchbrüche (11) für jeweils einen axialen Tragarm (8) eines gestellfesten Bremsträgers (1) aufweist und der axial verschiebbar an dem Bremsträger (1) gelagert ist, wobei Bremsbeläge (5) beiderseits der Bremsscheibe (4) axial verschiebbar an den Tragarmen (8) des Bremsträgers (1) gelagert sind und außerdem von dem Faustrahmensattel (3) übergriffen werden, mit einer einteilig aus Draht gebogenen Haltefeder (12), die einen lösbar mit dem axial äußeren Bremsbelag (5) verbundenen mittleren Abschnitt (13) und zwei im wesentlichen in entgegengesetzte tangentiale Richtungen von dem mittleren Abschnitt (13) abstehende Federarme (14) aufweist, und die sowohl radial den Faustrahmensattel (3) gegen den Bremsträger (1) als auch den axial äußeren Bremsbelag (5) axial gegen die Innenseite des äußeren Faustrahmensattelschenkels (7) verspannt.

2. Schwimmsattelscheibenbremse mit einem Faustrahmensattel (3) und einer Haltefeder (12) nach Anspruch 1, **dadurch gekennzeichnet, daß** der mittlere Abschnitt (13) der Haltefeder (12) im wesentlichen in dem Schenkelfenster (10) des äußeren Faustrahmensattelschenkels (7) angeordnet ist und daß die beiden Federarme (14) der Haltefeder (12) im wesentlichen an der Außenseite des äußeren Faustrahmensattelschenkels (7) angeordnet sind und jeweils mit ihren äußeren Endabschnitten (25) die Durchbrüche (11) durchgreifen und sich mit radialer Vorspannung gleitend an den Unterseiten der Tragarme (8) des Bremsträgers (1) abstützen.

3. Schwimmsattelscheibenbremse mit einem Faustrahmensattel (3) und einer Haltefeder (12) nach Anspruch 1 oder 2, **dadurch gekennzeichnet, daß** der mittlere Abschnitt (13) der Haltefeder (12) einen haarnadelförmig gebogenen Mittelteil (17) besitzt, dessen Schenkel einen verdickten, und sich vorzugsweise nach axial auswärts verjüngenden, Kopf (16) eines Zapfens (15) hintergreifen, der an dem äußeren Bremsbelag (5) angebracht ist und axial von diesem in das Schenkelfenster (10) hinein absteht, und daß der Mittelteil (17) mit axialer Zugspannung jeweils mit einem sich axial an dem äußeren Faustrahmensattelschenkel (7) abstützenden Federam (14) der Haltefeder (12) verbunden ist.

4. Schwimmsattelscheibenbremse mit einem Faustrahmensattel (3) und einer Haltefeder (12) nach Anspruch 3, **dadurch gekennzeichnet, daß** die beiden Schenkel des haarnadelförmigen Mittelteiles (17) jeweils in einen haarnadelartig in die entgegengesetzte Richtung umgebogenen zweiten Schenkel (18) übergehen, der über ein axial verlaufendes Stück (19) in einen Federarm (14) der Haltefeder (12) übergeht.

5. Schwimmsattelscheibenbremse mit einem Faustrahmensattel (3) und einer Haltefeder (12) nach Anspruch 1 oder 2, **dadurch gekennzeichnet, daß** der mittlere Abschnitt (13) der Haltefeder (12) einen tangential verlaufenden Mittelteil (28) aufweist, von dem aus sich beiderseits ein Schenkel (29) entgegen der radialen Richtung (R) erstreckt, die wiederum über ein im wesentlichen axial verlaufendes Stück (30) in die Federarme (14) der Haltefeder (12) übergehen, und daß die beiden axialen Stücke (30) sich jeweils mit einem Abschnitt, vorzugsweise punktförmig, auf der Unterseite des Schenkelfensters (10) abstützen und so mit den Federarmen (14) der Haltefeder (12) verbunden sind, daß ein nach außen ziehendes Kippmoment in dem mittleren Abschnitt (13) der Haltefeder (12) besteht.

6. Schwimmsattelscheibenbremse mit einem Faustrahmensattel (3) und einer Haltefeder (12) nach Anspruch 5, **dadurch gekennzeichnet, daß** der tangentiale Mittelteil (28) des mittleren Abschnittes (13) der Haltefeder (12) hinter einer an der Rückseite des äußeren Bremsbelages (5) befestigte Blechlasche (27) eingehängt ist, welche vorzugsweise nach unten und mit einem stufenförmig erweiterten Absatz (33) geöffnet ist.

7. Schwimmsattelscheibenbremse mit einem Faustrahmensattel (3) und einer Haltefeder (12) nach einem der vorhergehenden Ansprüche, **dadurch gekennzeichnet, daß** sich die beiden Federarme (14) der Haltefeder (12) jeweils in ihrem mittleren Bereich entgegen der radialen Richtung (R) und mit ihrem zum mittleren Abschnitt (13) weisenden inneren Federschenkel (22) in radialer Richtung (R) an einem am Rahmen (9) des Faustrahmensattels (3) vorgesehenen axialen Vorsprung oder Rücksprung abstützen.

8. Schwimmsattelscheibenbremse mit einem Faustrahmensattel (3) und einer Haltefeder (12) nach Anspruch 7, **dadurch gekennzeichnet, daß** die mittleren Bereiche der beiden Federarme (14) der Haltefeder (12) als spiralförmige Umschlingung (21) ausgebildet und jeweils auf einem zylindrischen, axial abstehenden Zapfen (24) des Rahmens (9) gelagert sind und daß sich die inneren Federschenkel (22) der beiden Federarme (14) der Haltefeder (12) an der Oberseite einer nutartigen, axial offenen Vertiefung (20) des Rahmens (9) abstützen.

9. Schwimmsattelscheibenbremse mit einem Faustrahmensattel (3) und einer Haltefeder (12) nach Anspruch 7, **dadurch gekennzeichnet, daß** die mittleren Bereiche der beiden Federarme (14) der Haltefeder (12) als entgegen der radialen Richtung (R) weisende Scheitelpunkte (34) der in einem stumpfen Winkel zueinander verlaufenden inneren und äußeren Federschenkel (22,23) ausgebildet sind und sich an der Unterseite einer nutartigen, axial offenen Vertiefung (20) des Rahmens (9) abstützen, während sich die jeweils inneren Federschenkel (22) der Federarme (14) jeweils an der Oberseite dieser nutartigen Vertiefung (20) abstützen.

10. Schwimmsattelscheibenbremse mit einem Faustrahmensattel (3) und einer Haltefeder (12) nach einem der vorhergehenden Ansprüche, **dadurch gekennzeichnet, daß** die freien Enden (26) der Haltefeder (12), welche sich an die äußeren Endabschnitte (25) der Federarme (14) anschließen, die die Durchbrüche (11) des Faustrahmensattels (3) durchgreifen, derartig umgebogen sind, daß sie die Innenseite des Rahmens (9) des Faustrahmensattels (3) hintergreifen und die Haltefeder (12) axial am Faustrahmensattel (3) arretieren.

## Claims

1. Floating-caliper disc brake with a fist-and-frame-type caliper (3) which, in the central area of its axially outer fist-and-frame-type-caliper leg (7), includes a leg window (10) and apertures (11) provided on both sides of this leg window (10) for an axial carrier arm (8) each of a brake carrier (1) stationarily connected to the chassis and which is supported axially displaceably on the brake carrier (1), with brake pads (5) being supported axially displaceably on the carrier arms (8) of the brake carrier (1) on both sides of the brake disc (4) and moreover being straddled by the fist-and-frame-type caliper (3), including a retaining spring (12) which is bent in one piece from wire and includes a central section (13), detachably connected with the axially outer brake pad (5), and two spring arms (14) essentially projecting from the central section (13) in opposite tangential directions, the said spring securing with bias the fist-and-frame-type caliper (3) radially relative to the brake carrier (1) and securing with bias the axially outer brake pad (5) axially relative to the inside of the outer fist-and-frame-type-caliper leg (7).

2. Floating-caliper disc brake with a fist-and-frame-type caliper (3) and a retaining spring (12) as claimed in claim 1,
**characterized in that** the central section (13) of the retaining spring (12) is essentially disposed within the leg window (10) of the outer fist-and-frame-type-caliper leg (7), and **in that** the two spring arms (14) of the retaining spring (12) essentially are disposed on the outside of the outer fist-and-frame-type-caliper leg (7) and each with their outer end sections (25) reach through the apertures (11) and are supported with radial prestress slidingly on the undersides of the carrier arms (8) of the brake carrier (1).

3. Floating-caliper disc brake with a fist-and-frame-type caliper (3) and a retaining spring (12) as claimed in claim 1 or claim 2,
**characterized in that** the central section (13) of the retaining spring (12) has a central part (17) which is bent in the shape of a hairpin and the legs of which part reach behind an enlarged, preferably axially outwards tapering head (16) of a pin (15) disposed on the outer brake pad (5) and axially projecting therefrom into the leg window (10), and **in that** the central part (17) is connected with axial tensile stress with a spring arm (14) each of the retaining spring (12), the said spring arms (14) being each supported axially on the outer fist-and-frame-type-caliper leg (7).

4. Floating-caliper disc brake with a fist-and-frame-type caliper (3) and a retaining spring (12) as claimed in claim 3,
**characterized in that** the two legs of the hairpin-shaped central part (17) each pass over into a second leg (18) which is bent like a hairpin in the opposite direction and which passes over into a spring arm (14) of the retaining spring (12) via an axially extending portion (19).

5. Floating-caliper disc brake with a fist-and-frame-type caliper (3) and a retaining spring (12) as claimed in claim 1 or claim 2,
**characterized in that** the central section (13) of the retaining spring (12) has a tangentially extending central part (28) whence, on both sides, a leg (29) extends in opposition to the radial direction (R), the said legs again passing over into the spring arms (14) of the retaining spring (12) via an essentially axially extending portion (30), and **in that** the two axial portions (30) each are supported with a section, preferably punctually, on the bottom side of the leg window (10) and are connected with the spring arms (14) of the retaining spring (12) so that there is an outwards pulling tilting moment in the central section (13) of the retaining spring (12).

6. Floating-caliper disc brake with a fist-and-frame-type caliper (3) and a retaining spring (12) as claimed in claim 5,
**characterized in that** the tangential central part (28) of the central section (13) of the retaining spring (12) is hung up behind a sheet-metal tongue (27) which is fastened to the back side of the outer brake pad (5) and is opening preferably downwards with a step-like expanded section (33).

7. Floating-caliper disc brake with a fist-and-frame-type caliper (3) and a retaining spring (12) as claimed in anyone of the preceding claims,
**characterized in that** the two spring arms (14) of the retaining spring (12) are supported each in their central areas in opposition to the radial direction (R) and with their inner spring legs (22), which point to the central section (13), in the radial direction (R) on an axial projection or recess provided on the frame (9) of the fist-and-frame-type caliper (3).

8. Floating-caliper disc brake with a fist-and-frame-type caliper (3) and a retaining spring (12) as claimed in claim 7,
**characterized in that** the central areas of the two spring arms (14) of the retaining spring (12) are formed as spiral looping (21) and each are mounted on a cylindrical, axially projecting pin (24) of the frame (9) and **in that** the inner spring legs (22) of the two spring arms (14) of the retaining spring (12) are supported on the upper side of an axially open groove-like recess (20) of the frame (9).

9. Floating-caliper disc brake with a fist-and-frame-type caliper (3) and a retaining spring (12) as claimed in claim 7,
**characterized in that** the central areas of the two spring arms (14) of the retaining spring (12) are designed as vertices (34) pointing in opposition to the radial direction (R) and being the vertices of the inner and outer spring legs (22,23) extending at an obtuse angle relative to each other and are supported on the bottom side of an axially open groove-like recess (20) of the frame (9), while the respectively inner spring legs (22) of the spring arms (14) each are supported on the upper side of this groove-like recess (20).

10. Floating-caliper disc brake with a fist-and-frame-type caliper (3) and a retaining spring (12) as claimed in anyone of the preceding claims,
**characterized in that** the free ends (26) of the retaining spring (12) which adjoin the outer end sections (25) of the spring arms (14) that reach through the apertures (11) of the fist-and-frame-type caliper (3) are bent so that they grip behind the inside of the frame (9) of the fist-and-frame-type caliper (3) and lock the retaining spring (12) axially on the fist-and-frame-type caliper (3).

## Revendications

1. Frein à disque à étrier flottant, comprenant un étrier en forme de chape à cadre (3) qui comporte, dans la zone centrale de sa branche axialement extérieure (7), une fenêtre de branche (10) et, des deux côtés de cette fenêtre de branche (10), des passages (11) respectifs destinés, pour chacun, à un bras de support axial (8) correspondant d'un support de frein (1) fixé au châssis, et qui est monté d'une manière mobile axialement sur le support de frein (1), des garnitures de frein (5) étant montées des deux côtés du disque de frein (4), de façon à pouvoir se déplacer axialement, sur les bras de support (8) du support de frein (1) et étant par ailleurs chevauchées par l'étrier en forme de chape à cadre (3), avec un ressort de maintien (12) plié d'une seule pièce à partir d'un fil métallique, et qui comprend un segment central (13) relié d'une manière séparable à la garniture de frein axialement extérieure (5) et deux bras de ressort (14) s'éloignant du segment central (13) essentiellement suivant des directions tangentielles opposées et qui exerce une contrainte à la fois radialement sur l'étrier en forme de chape à cadre (3) pour l'appliquer en appui sur le support de frein (1) et axialement sur la garniture de frein axialement extérieure (5) pour l'appliquer en appui sur la face intérieure de la branche extérieure d'étrier en forme de chape à cadre (7).

2. Frein à disque à étrier flottant comportant un étrier en forme de chape à cadre (3) et un ressort de maintien (12) suivant la revendication 1, **caractérisé en ce que** le segment central (13) du ressort de maintien (12) est disposé essentiellement dans la fenêtre de branche (10) de la branche extérieure d'étrier en forme de chape à cadre (7) et **en ce que** les deux bras de ressort (14) du ressort de maintien (12) sont disposés essentiellement sur la face extérieure de la branche extérieure d'étrier en forme de chape à cadre (7) et, chacun par leurs segments d'extrémité extérieure (25) respectifs, traversent les passages (11) et prennent appui avec une précontrainte radiale en glissant sur les faces intérieures des bras de support (8) du support de frein (1).

3. Frein à disque à étrier flottant comportant un étrier en forme de chape à cadre (3) et un ressort de maintien (12) suivant la revendication 1 ou 2, **caractérisé en ce que** le segment central (13) du ressort de maintien (12) possède une partie centrale (17), pliée en forme d'épingle à cheveux, dont les branches s'accrochent derrière une tête (16), plus épaisse et convergeant de préférence axialement vers l'extérieur, d'un plot (15) qui est placé sur la garniture de frein extérieure (5) et se dresse axialement à partir de celle-ci dans la fenêtre de branche (10), et **en ce que** la partie centrale (17) est reliée avec une contrainte de traction axiale respectivement à un bras de ressort (14) du ressort de maintien (12), lequel bras de ressort est en appui axial sur la branche extérieure d'étrier en forme de chape à cadre (7).

4. Frein à disque à étrier flottant comportant un étrier en forme de chape à cadre (3) et un ressort de maintien (12) suivant la revendication 3, **caractérisé en ce que** les deux branches de la partie centrale (17) en forme d'épingle à cheveux sont prolongées chacune par une deuxième branche (18) respective qui est repliée en forme d'épingle à cheveux dans la direction opposée et qui se prolonge, par l'intermédiaire d'un tronçon (19) s'étendant axialement, par un bras de ressort (14) du ressort de maintien (12).

5. Frein à disque à étrier flottant comportant un étrier en forme de chape à cadre (3) et un ressort de maintien (12) suivant la revendication 1 ou 2, **caractérisé en ce que** le segment central (13) du ressort de maintien (12) comporte une partie centrale (28) s'étendant tangentiellement à partir de laquelle s'étendent, sur chacun des deux côtés et dans la direction opposée à la direction radiale (R), des branches (29) respectives qui sont elles-mêmes prolongées, par l'intermédiaire d'un segment (30) essentiellement axial, par les bras de ressort (14) respectifs du ressort de maintien (12) et **en ce que** les deux segments axiaux (30) sont agencés d'une manière telle qu'ils prennent appui chacun par un segment, de préférence ponctuel, sur la face inférieure de la fenêtre de branche (10) et sont reliés aux bras de ressort (14) du ressort de maintien (12) d'une manière telle qu'il existe, dans le segment central (13) du ressort de maintien (12), un couple tirant vers l'extérieur.

6. Frein à disque à étrier flottant comportant un étrier en forme de chape à cadre (3) et un ressort de maintien (12) suivant la revendication 5, **caractérisé en ce que** le partie centrale tangentielle (28) du segment central (13) du ressort de maintien (12) est suspendue derrière une lame en tôle (27), fixée sur la face arrière de la garniture de frein extérieure (5), qui s'ouvre de préférence vers le bas et comporte un décrochement élargi (33) de forme étagée.

7. Frein à disque à étrier flottant comportant un étrier en forme de chape à cadre (3) et un ressort de maintien (12) suivant l'une des revendications précédentes, **caractérisé en ce que** les deux bras de ressort (14) du ressort de maintien (12) prennent chacun appui, dans sa zone centrale, à l'encontre de la direction radiale (R) et que, par sa branche de ressort intérieure (22) dirigée vers le segment central (13), suivant la direction radiale (R), sur une partie en saillie axiale ou partie en retrait axial prévue sur le cadre (9) de l'étrier en forme de chape à cadre (3).

8. Frein à disque à étrier flottant comportant un étrier en forme de chape à cadre (3) et un ressort de maintien (12) suivant la revendication 7, **caractérisé en ce que** les zones centrales des deux bras de ressort (14) du ressort de maintien (12) sont réalisées sous forme d'une partie enroulée (21) en forme d'hélice et sont montées chacune sur un plot (24) cylindrique et en saillie axiale du cadre (9), et **en ce que** la branche de ressort intérieure (22) des deux bras de ressort (14) du ressort de maintien (12) prennent appui sur la face supérieure d'une partie en retrait (20) du cadre (9) qui est en forme de rainure et s'ouvre axialement.

9. Frein à disque à étrier flottant comportant un étrier en forme de chape à cadre (3) et un ressort de maintien (12) suivant la revendication 7, **caractérisé en ce que** les zones centrales des deux bras de ressort (14) du ressort de maintien (12) sont réalisées sous forme de sommets (34), dirigés à l'opposé de la direction radiale (R), des branches de ressort intérieure et extérieure (22,23) qui s'étendent en faisant un angle obtus l'une vis-à-vis de l'autre et qui prennent appui sur la face inférieure d'une partie en retrait (20), en forme de rainure et s'ouvrant axialement, du cadre (9), tandis que les branches de ressort chaque fois intérieures (22) des bras de ressort (14) prennent appui chacune sur la face supérieure de cette partie en retrait (20) en forme de rainure.

10. Frein à disque à étrier flottant comportant un étrier en forme de chape à cadre (3) et un ressort de maintien (12) suivant l'une des revendications précédentes, **caractérisé en ce que** les extrémités libres (26) du ressort de maintien (12), qui se raccordent aux segments d'extrémité extérieure (25) des bras de ressort (14), lesquels segments traversent les passages (11) de l'étrier en forme de chape à cadre (3), sont pliées d'une manière telle qu'elles s'accrochent derrière la face intérieure du cadre (9) de l'étrier en forme de chape à cadre (3) et immobilisent le ressort de maintien (12) axialement sur l'étrier en forme de chape à cadre (3).
